# EUROPEAN PATENT APPLICATION

(11) **EP 3 972 024 A1**
(43) Date of publication of application: **23.03.2022**
(21) Application number: 19933122.4
(22) Date of filing: 20.12.2019
(51) Int. Cl.: H01M 10/0525, H01M 10/0567

(54) **SECONDARY LITHIUM-ION BATTERY ELECTROLYTE FOR REDUCING BATTERY RESISTANCE AND SECONDARY LITHIUM-ION BATTERY THEREOF**

(30) Priority: 12.06.2019 CN 201910508223
(71) Applicant: Guangzhou Tinci Materials Technology Co., Ltd., Guangzhou, Guangdong 510760 (CN)
(72) Inventor: FAN, Weizhen, Guangzhou, Guangdong 510760 (CN); CAO, Gejin, Guangzhou, Guangdong 510760 (CN); FAN, Chaojun, Guangzhou, Guangdong 510760 (CN); YU, Le, Guangzhou, Guangdong 510760 (CN); ZHAO, Jingwei, Guangzhou, Guangdong 510760 (CN)
(74) Representative: Appleyard Lees IP LLP
(86) International application number: PCT/CN2019/127033
(87) International publication number: WO 2020/248567

(57) **Abstract**

The present invention relates to the technical field of secondary lithium-ion batteries, specifically, provided in the present invention are a secondary lithium-ion battery electrolyte for reducing battery resistance and a secondary lithium-ion battery. The present invention, in a first aspect, provides the electrolyte for the secondary lithium-ion battery, comprising a nonaqueous solvent, a lithium salt and an additive, where the additive comprises a sulfonate compound. The secondary lithium-ion battery electrolyte and the secondary lithium-ion battery provided in the present invention are provided with a reduced resistance and are provided with improved low-temperature performance, high-temperature performance, and cycle life.

## Description

### TECHNICAL FIELD

The present invention relates to the technical field of secondary lithium-ion batteries, specifically, provided in the present invention is a secondary lithium-ion battery electrolyte solution for reducing battery resistance and a secondary lithium-ion battery.

### BACKGROUND

Since secondary lithium-ion batteries have the characteristics of high energy density, long cycle life, no pollution, and the like, they are widely used in consumer electronics, power automobile batteries and energy sources.

In recent years, with the depletion of global petroleum energy sources and the development of new energy source technologies, the secondary lithium-ion battery technology used in the automobile power is rapidly developing. Higher requirements are put forward on the performance of secondary lithium-ion batteries, such as long service life, usability under extreme temperature, fast charge and discharge (high charge and discharge rate), and excellent safety.

A battery pack of an electric vehicle is generally composed of multiple batteries in series or in parallel. The batteries may generate a certain amount of heat during normal operation, so that a battery thermal management system is necessary for thermal management of the batteries in the entire battery pack. The greater the discharge rate of the battery or the greater the internal resistance of the battery, the greater the heat generation of the battery. If the internal resistance of the battery can be reduced, the heat generation of the battery can be reduced. In addition, the higher the charge and discharge rates of the battery, the greater the heat generation of the battery. If the internal resistance of the battery can be reduced, the heat generation of the battery of high charge and discharge rates can also be reduced.

Since the battery pack is composed of multiple batteries, the service life of the entire battery pack depends on the consistency of the individual battery. If the resistance of the battery can be reduced, the consistency of the battery can be greatly improved, thereby increasing the service life of the battery.

In terms of battery safety, if the internal resistance of the battery is too large, the battery voltage will rise rapidly during charging, leaving the battery at risk of overcharging. Once the battery is overcharged, fire and explosion may occur. In order to solve the problem of battery overcharge, the solution of adding an anti-overcharge additive to the battery electrolyte is currently widely used. Once the battery is overcharged, the anti-overcharge additive may initiate a polymerization reaction, which will increase the internal resistance of the battery, block the internal current of the battery, and prevent the battery from fire and explosion. However, although the solutions of adding the anti-overcharge additive to the electrolyte solution can improve the safety to a certain extent, the damage of the battery caused by the battery overcharge is irreversible. If the battery resistance can be reduced fundamentally and the overcharge of the battery can be suppressed from the source, the service life and safety of the battery will be improved.

### SUMMARY

In view of the above-mentioned problems, the present invention provides, in a first aspect, an electrolyte solution of secondary lithium-ion battery, comprising a non-aqueous solvent, a lithium salt and an additive, wherein the additive comprises a sulfonate compound.

In a preferred technical solution of the present invention, the electrolyte solution of secondary lithium-ion battery according to claim 1 is provided, wherein the sulfonate compound is at least one compound selected from compounds represented by the general formula (A): 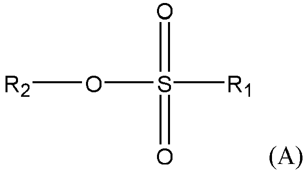 wherein R₁ and R₂ are each independently selected from one of aliphatic hydrocarbon groups having 1-5 carbon atoms, aryl, alkyl-substituted aryl, and silanyl; and any of the above groups can be substituted with a halogen atom.

In a preferred technical solution of the present invention, R₁ and R₂ are each independently selected from one of methyl, ethyl, propyl, fluoromethyl, fluoroethyl, vinyl, allyl, phenyl, benzyl, fluorophenyl, trimethylsilanyl, and trivinylsilanyl.

In a preferred technical solution of the present invention, the sulfonate compound is one or more selected from the group consisting of 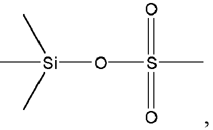 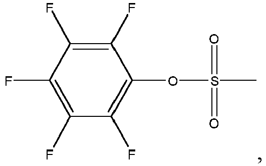 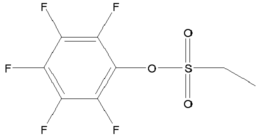 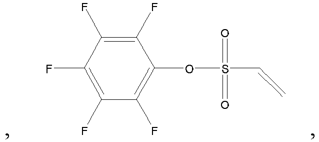 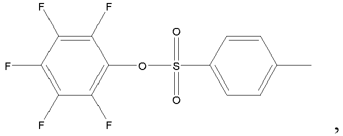 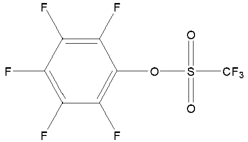 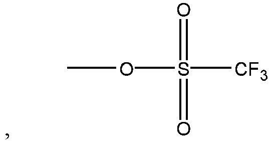 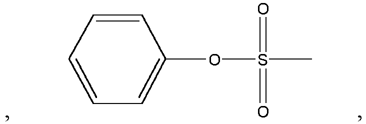 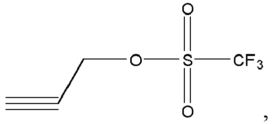 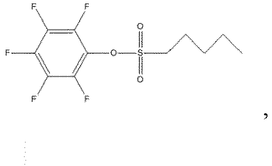 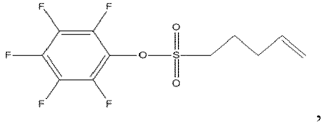 and

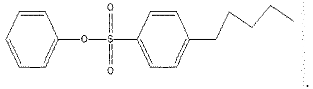

In a preferred technical solution of the present invention, the mass of the sulfonate compound accounts for 0.1-5% of the total mass of the electrolyte solution.

In a preferred technical solution of the present invention, the additive further comprises a second additive, wherein the second additive is one or more selected from the group consisting of vinylene carbonate, fluoroethylene carbonate, lithium difluorophosphate, lithium bis(oxalato)borate, lithium difluoro(oxalato)borate, 1,3-propanesultone, triallyl isocyanurate, methylene methanedisulfonate, vinyl sulfate, triallyl phosphate, tripropynyl phosphate, tris(trimethylsilanyl) phosphate, and tris(trimethylsilanyl) borate.

In a preferred technical solution of the present invention, the mass of the second additive accounts for 0.01-10% of the total mass of the electrolyte solution.

In a preferred technical solution of the present invention, the mass of the non-aqueous solvent accounts for 67-91% of the total mass of the electrolyte solution.

In a preferred technical solution of the present invention, the non-aqueous solvent comprises a cyclic ester and a chain ester.

In a preferred technical solution of the present invention, the cyclic ester is one or more selected from the group consisting of ethylene carbonate, propylene carbonate, butylene carbonate, and γ-butyrolactone.

In a preferred technical solution of the present invention, the chain ester is one or more selected from the group consisting of dimethyl carbonate, diethyl carbonate, diethylcarbonate, dipropyl carbonate, methyl ethyl carbonate, methyl propyl carbonate, ethyl propyl carbonate, methyl formate, ethyl formate, propyl formate, methyl acetate, ethyl acetate, propyl acetate, methyl propionate, ethyl propionate, propyl propionate, and 2,2-difluoroethyl acetate.

In a preferred technical solution of the present invention, the mass of the lithium salt accounts for 8-18% of the total mass of the electrolyte solution.

In a preferred technical solution of the present invention, the lithium salt is at least one selected from the group consisting of lithium hexafluorophosphate, lithium bis(fluorosulfonyl)imide, and lithium bis(trifluoromethanesulfonyl)imide.

The present invention provides, in a second aspect, a secondary lithium-ion battery comprising a positive electrode, a negative electrode and an electrolyte solution, wherein the electrolyte solution used in the secondary lithium-ion battery is the electrolyte solution as described above.

In a preferred technical solution of the present invention, the secondary lithium-ion battery is any one selected from the group consisting of lithium-ion battery, lithium-sulfur battery, and lithium air battery.

In a preferred technical solution of the present invention, an active material of the positive electrode is a lithium-containing transition metal oxide and/or a lithium-containing transition metal phosphate compound.

In a preferred technical solution of the present invention, the active material of the positive electrode is any one selected from the group consisting of Li₁₊ₐ(NiₓCo_{y}M_{1-x-y})O₂, Li(NiₙMnₘCo₂₋ₙ₋ₘ)O₄, and LiMₚ(PO₄)_{q}, wherein 0≤a≤0.3, 0≤x≤1, 0≤y≤1, 0≤x+y≤1, 0≤n≤2, 0≤m≤2, and 0≤n+m≤2, M is any one selected from the group consisting of Al, Fe, Ni, Co, Mn, and V, 0<p<5, and 0<q<5.

In a preferred technical solution of the present invention, an active material of the negative electrode is one or more selected from the group consisting of metal lithium, lithium alloy, carbon material, silicon or tin and an oxide thereof.

Compared with the prior art, the present invention has the following beneficial effects: the present invention provides a secondary lithium-ion battery electrolyte solution, and the secondary lithium-ion battery using this electrolyte solution has lower impedance and better low-temperature performance, high-temperature performance and cycle life; in addition, the present invention also discloses the lithium-ion battery comprising the electrolyte solution.

### DETAILED DESCRIPTION

### [Non-aqueous Electrolyte Solution]

In order to solve the above-mentioned technical problems, the present invention provides, in the first aspect, a secondary lithium-ion battery electrolyte solution comprising a non-aqueous solvent, a lithium salt and an additive, wherein the additive comprises a sulfonate compound.

### <Additive>

### (Sulfonate compound)

In one embodiment, the sulfonate compound is at least one selected from the compounds represented by the general formula (A): 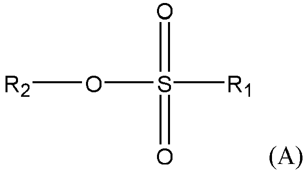 wherein R₁ and R₂ are each independently selected from one of aliphatic hydrocarbon groups having 1-5 carbon atoms, aryl, alkyl-substituted aryl, and silanyl; and any of the above groups can be substituted with a halogen atom.

The aliphatic hydrocarbon group may be, such as alkyl, alkenyl, and alkynyl.

The alkyl may be, such as methyl, ethyl, n-propyl, isopropyl, n-butyl, sec-butyl, isobutyl, tert-butyl, n-pentyl, isopentyl, sec-pentyl, neopentyl, 1-methylbutyl, 2-methylbutyl, 1,1-dimethylpropyl, 1,2-dimethylpropyl, and the like.

The alkyl substituted with the halogen atom may be, such as fluoromethyl, difluoromethyl, trifluoromethyl, 1-fluoroethyl, 2-fluoroethyl, 1,1-difluoroethyl, 1,2-difluoroethyl, 2,2-difluoroethyl, 2,2,2-trifluoroethyl, perfluoroethyl, 1-fluoro-n-propyl, 2-fluoro-n-propyl, 3-fluoro-n-propyl, 1,1-difluoro-n-propyl, 1,2-difluoro-n-propyl, 1,3-difluoro-n-propyl, 2,2-difluoro-n-propyl, 2,3-difluoro-n-propyl, 3,3-difluoro-n-propyl, 3,3,3-trifluoro-n-propyl, 2,2,3,3,3-pentafluoro-n-propyl, perfluoro-n-propyl, 1-fluoroisopropyl, 2-fluoroisopropyl, 1,2-difluoroisopropyl, 2,2-difluoroisopropyl, 2,2'-difluoroisopropyl, 2,2,2,2',2',2'-hexafluoroisopropyl, 1-fluoro-n-butyl, 2-fluoro-n-butyl, 3-fluoro-n-butyl, 4-fluoro-n-butyl, 4,4,4-trifluoro-n-butyl, perfluoro-n-butyl, 2-fluoro-tert-butyl, perfluoro-tert-butyl; fluoromethyl, dichloromethyl, trifluoromethyl, 1-chloroethyl, 2-fluoroethyl, 1,1-dichloroethyl, 1,2-difluoroethyl, 2,2-dichloroethyl, 2,2,2-trifluoroethyl, perchloroethyl, 1-chloro-n-propyl, 2-chloro-n-propyl, 3-chloro-n-propyl, 1,1-dichloro-n-propyl, 1,2-dichloro-n-propyl, 1,3-dichloro-n-propyl, 2,2-dichloro-n-propyl, 2,3-dichloro-n-propyl, 3,3-dichloro-n-propyl, 3,3,3-trichloro-n-propyl, 2,2,3,3,3-pentachloro-n-propyl, perchloro-n-propyl, 1-chloroisopropyl, 2-chloroisopropyl, 1,2-dichloroisopropyl, 2,2-dichloroisopropyl, 2,2'-dichloroisopropyl, 2,2,2,2',2',2'-hexachloroisopropyl, 1-chloro-n-butyl, 2-chloro-n-butyl, 3-chloro-n-butyl, 4-chloro-n-butyl, 4,4,4-trichloro-n-butyl, perchloro-n-butyl, 2-chloro-tert-butyl, perchloro-tert-butyl, and the like.

The alkenyl may be, such as alkenyl, 1-propenyl, 2-propenyl, isopropenyl, 1-butenyl, 2-butenyl, 3-butenyl, 1-pentenyl, 2-pentenyl, 3-pentenyl, 4-pentenyl, and the like.

The alkenyl substituted with the halogen atom may be, such as 1-fluorovinyl, 2-fluorovinyl, 1,2-difluorovinyl, 2,2-difluorovinyl, 1,2,2-trifluorovinyl, 1-fluoro-1-propenyl, 2-fluoro-1-propenyl, 3-fluoro-1-propenyl, 1,2-difluoro-1-propenyl, 1,3-difluoro-1-propenyl, 2,3-difluoro-1-propenyl, 3,3-difluoro-1-propenyl, 1,2,3-trifluoro-1-propenyl, 1,3,3-trifluoro-1-propenyl, 2,3,3-trifluoro-1-propenyl, 3,3,3-trifluoro-1-propenyl, 1,2,3,3-tetrafluoro-1-propenyl, 1,3,3,3-tetrafluoro-1-propenyl, 2,3,3,3-tetrafluoro-1-propenyl, 1,2,3,3,3-pentafluoro-1-propenyl, 2-fluoro-1-methylvinyl, 1-fluoromethylvinyl, 2-fluoro-1-fluoromethylvinyl, 1-difluoromethylvinyl, 2,2-difluoro-1-methylvinyl, 2,2-difluoro-1-fluoromethylvinyl, 2-fluoro-1-difluoromethylvinyl, 1-trifluoromethylvinyl, 2-fluoro-1-trifluoromethylvinyl, 2,2-difluoro-1-difluoromethylvinyl, 2,2-difluoro-1-trifluoromethylvinyl, 1-fluoroallyl, 2-fluoroallyl, 3-fluoroallyl, 1,1-difluoroallyl, 1,2-difluoroallyl, 1,3-difluoroallyl, 2,3-difluoroallyl, 3,3-difluoroallyl, 1,1,2-trifluoroallyl, 1,1,3-trifluoroallyl, 1,2,3-trifluoroallyl, 1,3,3-trifluoroallyl, 2,3,3-trifluoroallyl, 1,1,1,2-tetrafluoroallyl, 1,1,1,3-tetrafluoroallyl, 1,1,2,3-tetrafluoroallyl, 1,1,3,3-tetrafluoroallyl, 1,2,3,3-tetrafluoroallyl, 1,1,1,2,3-pentafluoroallyl, 1,1,1,3,3-pentafluoroallyl, 1,1,2,3,3-pentafluoroallyl, 1,1,1,2,3,3-hexafluoroallyl, and the like.

The alkynyl may be, such as ethynyl, 1-propynyl, 2-propynyl, 1-butynyl, 2-butynyl, 3-butynyl, 1-pentynyl, 2-pentynyl, 3-pentynyl, 4-pentynyl, and the like.

The alkynyl substituted with the halogen atom may be, such as 2-fluoroethynyl, 3-fluoro-1-propynyl, 3,3-difluoro-1-propynyl, 3,3,3-trifluoro-1-propynyl, 3-fluoro-2-propynyl, 1-fluoro-2-propynyl, 1,1-difluoro-2-propynyl, 1,3-difluoro-2-propynyl, 1,1,3 -trifluoro-2-propynyl, and the like.

The aryl may be, such as phenyl, tolyl, xylenyl, ethylphenyl, n-propylphenyl, isopropylphenyl, n-butylphenyl, sec-butylphenyl, isobutylphenyl, tert-butylphenyl, and the like.

The phenyl substituted with alkyl may be, such as benzyl, α-methylbenzyl, 1-methyl-1-phenylethyl, phenethyl, 2-phenylpropyl, 2-methyl-2-phenylpropyl, 3-phenylpropyl, 3-phenylbutyl, 3-methyl-3-phenylbutyl, 4-phenylbutyl, 5-phenylpentyl, 6-phenylhexyl, and the like.

The phenyl substituted with the halogen atom may be, such as 2-fluorophenyl, 3-fluorophenyl, 4-fluorophenyl, 2,3-difluorophenyl, 2,4-difluorophenyl, 2,5-difluorophenyl, 2,6-difluorophenyl, 2,3,4-trifluorophenyl, 2,3,5-trifluorophenyl, 2,3,6-trifluorophenyl, 2,4,5-trifluorophenyl, 2,3,6-trifluorophenyl, 2,5,6-trifluorophenyl, 3,4,5-trifluorophenyl, 2,3,4,5-tetrafluorophenyl, 2,3,4,6-tetrafluorophenyl, 2,4,5,6-tetrafluorophenyl, and pentafluorophenyl.

The silanyl may be, such as -Si(CH₃)₃, -Si(CH₃)₂(C₂H₅), -Si(CH₃)₂(CH=CH₂), - Si(CH₃)₂(CH₂CH₂CH₃), -Si (CH₃)₂(CH₂CH=CH₂), -Si(CH₃)₂(C(CH₃)=CH₂), - Si(CH₃)₂[CH(CH₃)₂], -Si(CH₃)₂[(CH₂)₃CH₃), -Si(CH₃)₂[CH₂CH(CH₃)₂], -Si(CH₃)₂[C(CH₃)₃], - Si(CH₃)₂(C₆H₅), -Si(CH₃)(C₆H₅)₂, -Si (C₆H₅)₃, -Si(C₂H₅)₃, -Si(CH=CH₂)₃, -Si(CH₂CH₂CH₃)₃, -Si[CH(CH₃)₂]₃, -Si(CH₂CH=CH₂)₃, -Si(CF₃)₃ , and the like. The remaining unsubstituted hydrogen atoms may be replaced by halogen atoms.

In the sulfonate compound, preferably, R₁ and R₂ are each independently selected from one of methyl, ethyl, propyl, fluoromethyl, fluoroethyl, vinyl, propenyl, phenyl, tolyl, fluorophenyl, trimethylsilanyl, trivinyl, and silanyl.

More preferably, the sulfonate compound is one or more selected from the group consisting of 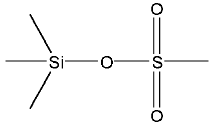 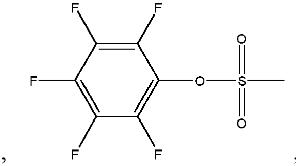 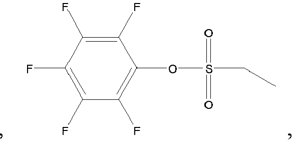 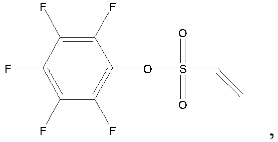 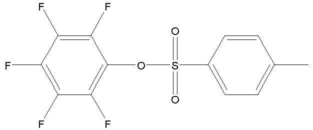 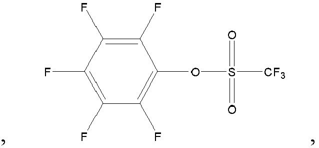 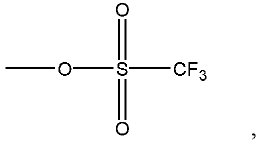 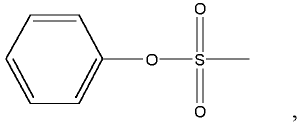 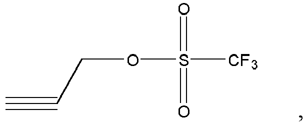 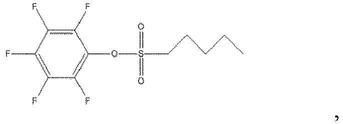 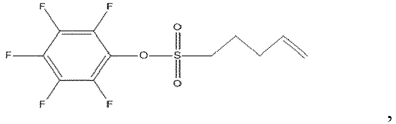 and

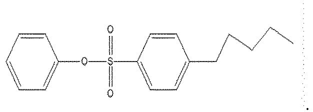

In a preferred embodiment, the mass of the sulfonate compound accounts for 0.1-5% of the total mass of the electrolyte solution; more preferably, the mass of the sulfonate compound accounts for 0.5-5% of the total mass of the electrolyte solution.

In one embodiment, the additive further comprises a second additive.

The second additive may be, such as a carbonate compound having a carbon-carbon unsaturated bond, a carbonate compound having a halogen atom, a fluorophosphoric acid compound, a phosphate compound, a silicon-containing compound, a sulfonate compound, a sulfate compound, a compound having an isocyanate group, and the like.

### (Second Additive)

The carbonate compound having the carbon-carbon unsaturated bond is not otherwise limited, and any unsaturated carbonate may be used, as long as it is the carbonate having the carbon-carbon unsaturated bond such as carbon-carbon double bond or carbon-carbon triple bond. In addition, the carbonate having an aromatic ring is also included in the carbonate having the unsaturated bond.

The carbonate compound having the carbon-carbon unsaturated bond may be, chain carbonates such as methyl vinyl carbonate, ethyl vinyl carbonate, divinyl carbonate, methyl propynyl carbonate, ethyl propynyl carbonate, dipropynyl carbonate, methyl phenyl carbonate, ethyl phenyl carbonate, and diphenyl carbonate; cyclic carbonates such as vinylene carbonate, methylvinylene carbonate, 4,4-dimethylvinylene carbonate, 4,5-dimethylvinylene carbonate, vinylethylene carbonate, 4,4-divinylethylene carbonate, 4,5-divinylethylene carbonate, ethynylethylene carbonate, 4,4-diethynylethylene carbonate, 4,5-diethynylethylene carbonate, propynylethylene carbonate, 4,4-dipropynylethylene carbonate, and 4,5-dipropynylethylene carbonate; phenylethylene carbonate, 4,5-diphenylethylene carbonate, diphenyl carbonate, ethyl phenyl carbonate, methyl phenyl carbonate, tert-butyl phenyl carbonate, and the like.

The carbonate compound having the halogen atom may be, such as fluoroethylene carbonate, chloroethylene carbonate, 4,4-difluoroethylene carbonate, 4,5-difluoroethylene carbonate, 4,4-dichloroethylene carbonate, 4,5-dichloroethylene carbonate, 4-fluoro-4-methylethylene carbonate, 4-chloro-4-methylethylene carbonate, 4,5-difluoro-4-methylethylene carbonate, 4,5-dichloro-4-methylethylene carbonate, 4-fluoro-5-methylethylene carbonate, 4-chloro-5-methylethylene carbonate, 4,4-difluoro-5-methylethylene carbonate, 4,4-dichloro-5-methylethylene carbonate, 4-(fluoromethyl)ethylene carbonate, 4-(chloromethyl)ethylene carbonate, 4-(difluoromethyl)ethylene carbonate, 4-(dichloromethyl)ethylene carbonate, 4-(trifluoromethyl)ethylene carbonate, 4-(trichloromethyl)ethylene carbonate, 4-(fluoromethyl)-4-fluoroethylene carbonate, 4-(chloromethyl)-4-chloroethylene carbonate, 4-(fluoromethyl)-5-fluoroethylene carbonate, 4-(chloromethyl)-5-chloroethylene carbonate, 4-fluoro-4,5-dimethylethylene carbonate, 4-chloro-4,5-dimethylethylene carbonate, 4,5-difluoro-4,5-dimethylethylene carbonate, 4,5-dichloro-4,5-dimethylethylene carbonate, 4,4-difluoro-5,5-dimethylethylene carbonate, 4,4-dichloro-5,5-dimethylethylene carbonate, 4-fluoro-4-vinylethylene carbonate, 4-fluoro-5-vinylethylene carbonate, 4,4-difluoro-5-vinylethylene carbonate, 4,5-difluoro-4-vinylethylene carbonate, 4-chloro-5-vinylethylene carbonate, 4,4-dichloro-5-vinylethylene carbonate, 4,5-dichloro-4-vinylethylene carbonate, 4-fluoro-4,5-divinylethylene carbonate, 4,5-difluoro-4,5-divinylethylene carbonate, 4-chloro-4,5-divinylethylene carbonate, 4,5-dichloro-4,5-divinylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate, 4-chloro-4-phenylethylene carbonate, 4-chloro-5-phenylethylene carbonate, 4,4-dichloro-5-phenylethylene carbonate, 4,5-dichloro-4-phenylethylene carbonate, 4,5-difluoro-4,5-diphenylethylene carbonate, 4,5-dichloro-4,5-diphenylethylene carbonate, and the like.

The carbonate compound having the halogen atom also may be, such as fluoromethyl phenyl carbonate, 2-fluoroethyl phenyl carbonate, 2,2-difluoroethyl phenyl carbonate, 2,2,2-trifluoroethyl phenyl carbonate, chloromethyl phenyl carbonate, 2-chloroethyl phenyl carbonate, 2,2-dichloroethyl phenyl carbonate, 2,2,2-trichloroethyl phenyl carbonate, fluoromethyl vinyl carbonate, 2-fluoroethyl vinyl carbonate, 2,2-difluoroethyl vinyl carbonate, 2,2,2-trifluoroethyl vinyl carbonate, chloromethyl vinyl carbonate, 2-chloroethyl vinyl carbonate, 2,2-dichloroethyl vinyl carbonate, 2,2,2-trichloroethyl vinyl carbonate, fluoromethyl allyl carbonate, 2-fluoroethyl allyl carbonate, 2,2-difluoroethyl allyl carbonate, 2,2,2-trifluoroethyl allyl carbonate, chloromethyl allyl carbonate, 2-chloroethyl allyl carbonate, 2,2-dichloroethyl allyl carbonate, 2,2,2-trichloroethyl allyl carbonate, and the like.

The carbonate compound having the halogen atom also may be, such as2-fluoroethyl methyl carbonate, ethyl fluoromethyl carbonate, 2,2-difluoroethyl methyl carbonate, 2-fluoroethyl fluoromethyl carbonate, ethyl difluoromethyl carbonate, 2,2,2-trifluoroethyl methyl carbonate, 2,2-difluoroethyl fluoromethyl carbonate, 2-fluoroethyl difluoromethyl carbonate, ethyl trifluoromethyl carbonate, 2-chloroethyl methyl carbonate, ethyl chloromethyl carbonate, 2,2-dichloroethyl methyl carbonate, 2-chloroethyl chloromethyl carbonate, ethyl dichloromethyl carbonate, 2,2,2-trichloroethyl methyl carbonate, 2,2-dichloroethyl chloromethyl carbonate, 2-chloroethyl dichloromethyl carbonate, ethyl trichloromethyl carbonate, ethyl (2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, bis(2,2,2-trifluoroethyl) carbonate, ethyl-(2-chloroethyl) carbonate, ethyl-(2,2-dichloroethyl) carbonate, bis(2-chloroethyl) carbonate, ethyl (2,2,2-trichloroethyl) carbonate, 2,2-dichloroethyl-2'-chloroethyl carbonate, bis(2,2-dichloroethyl) carbonate, 2,2,2-trichloroethyl-2'-chloroethyl carbonate, 2,2,2-trichloroethyl-2',2'-dichloroethyl carbonate, bis(2,2,2-trichloroethyl) carbonate, fluoromethyl methyl carbonate, difluoromethyl methyl carbonate, trifluoromethyl methyl carbonate, bis(fluoromethyl) carbonate, bis(difluoromethyl) carbonate, bis(trifluoromethyl) carbonate, chloromethyl methyl carbonate, dichloromethyl methyl carbonate, trichloromethyl methyl carbonate, bis(chloromethyl) carbonate, bis(dichloromethyl) carbonate, and bis(trichloromethyl) carbonate.

The fluorophosphoric acid compound may be, such as lithium difluorophosphate, difluorophosphoric acid, monofluorophosphoric acid, methyl difluorophosphate, ethyl difluorophosphate, dimethyl fluorophosphate, diethyl fluorophosphate, lithium difluoro-bis(oxalato)phosphate, lithium tetrafluoro(oxalato)phosphate, lithium tris(oxalato)phosphate, lithium difluoro(oxalato)borate, lithium bis(oxalato)borate, and the like.

The phosphate compound may be compounds with vinyl such as dimethyl vinyl phosphate, diethyl vinyl phosphate, dipropyl vinyl phosphate, dibutyl vinyl phosphate, and dipentyl vinyl phosphate;
compounds with allyl, such as allyl dimethyl phosphate, allyl diethyl phosphate, allyl dipropyl phosphate, allyl dibutyl phosphate and allyl dipentyl phosphate;
compounds with propargyl, such as propargyl dimethyl phosphate, propargyl diethyl phosphate, propargyl dipropyl phosphate, propargyl dibutyl phosphate and propargyl dipentyl phosphate;
compounds with 2-acryloxymethyl, such as 2-acryloxymethyl dimethyl phosphate, 2-acryloxymethyl diethyl phosphate, 2-acryloxymethyl dipropyl phosphate, 2-acryloxymethyl dibutyl phosphate and 2-acryloxymethyl dipentyl phosphate;
compounds with 2-acryloxyethyl, such as 2-acryloxyethyl dimethyl phosphate, 2-acryloxyethyl diethyl phosphate, 2-acryloxyethyl dipropyl phosphate, 2-acryloxyethyl dibutyl phosphate and 2-acryloxyethyl dipentyl phosphate;
compounds with vinyl, such as methyl divinyl phosphate, ethyl divinyl phosphate, propyl divinyl phosphate, butyl divinyl phosphate and pentyl divinyl phosphate;
compounds with allyl, such as diallyl methyl phosphate, diallyl ethyl phosphate, diallyl propyl phosphate, diallyl butyl phosphate and diallyl pentyl phosphate;
compounds with propargyl, such as dipropargyl methyl phosphate, dipropargyl ethyl phosphate, dipropargyl propyl phosphate, dipropargyl butyl phosphate and dipropargyl pentyl phosphate;
compounds with 2-acryloxymethyl, such as bis(2-acryloxymethyl) methyl phosphate, bis(2-acryloxymethyl) ethyl phosphate, bis(2-acryloxymethyl) propyl phosphate, bis(2-acryloxymethyl) butyl phosphate and bis(2-acryloxymethyl) pentyl phosphate;
compounds with 2-acryloxyethyl, such as bis(2-acryloxyethyl) methyl phosphate, bis(2-acryloxyethyl) ethyl phosphate, bis(2-acryloxyethyl) propyl phosphate, bis(2-acryloxyethyl) butyl phosphate and bis(2-acryloxyethyl) pentyl phosphate; and
trivinyl phosphate, triallyl phosphate, tripropargyl phosphate, tris(2-acryloxymethyl) phosphate and tris(2-acryloxyethyl) phosphate, and the like.

The silicon-containing compound may be phosphate compounds such as tris(trimethylsilyl) phosphate, bis(trimethylsilyl) phosphate, mono(trimethylsilyl) phosphate, dimethyl trimethylsilyl phosphate, methyl bis(trimethylsilyl) phosphate, diethyl trimethylsilyl phosphate, ethyl bis(trimethylsilyl) phosphate, dipropyl trimethylsilyl phosphate, propyl bis(trimethylsilyl) phosphate, dibutyl trimethylsilyl phosphate, butyl bis(trimethylsilyl) phosphate, dioctyl trimethylsilyl phosphate, octyl bis(trimethylsilyl) phosphate, diphenyl trimethylsilyl phosphate, phenyl bis(trimethylsilyl) phosphate, bis(trifluoroethyl)(trimethylsilyl) phosphate, trifluoroethyl bis(trimethylsilyl) phosphate, compounds resulting from substitution of the trimethylsilyl of the foregoing silyl phosphates with triethylsilyl, triphenylsilyl, dimethylethylsilyl etc., and silyl phosphate;
borate compounds such as tris(trimethylsilanyl) borate, tris(trimethoxysilyl) borate, tris(triethylsilyl) borate, tris(triethoxysilyl) borate, tris(dimethylvinylsilyl) borate and tris(diethylvinylsilyl) borate; and
sulfonate compounds such as trimethylsilyl methanesulfonate and trimethylsilyl tetrafluoromethanesulfonate.

The sulfonate compound may be sultone compunds such as 1,3-propanesultone, 1-fluoro-1,3-propanesultone, 2-fluoro-1,3-propanesultone, 3-fluoro-1,3-propanesultone, 1-methyl-1,3-propanesultone, 2-methyl-1,3-propanesultone, 3-methyl-1,3-propanesultone, 1-propen-1,3-sultone, 2-propen-1,3-sultone, 1-fluoro-1-propen-1,3-sultone, 2-fluoro-1-propen-1,3-sultone, 3-fluoro-1-propen-1,3-sultone, 1-fluoro-2-propen-1,3-sultone, 2-fluoro-2-propen-1,3-sultone, 3-fluoro-2-propen-1,3-sultone, 1-methyl-1-propen-1,3-sultone, 2-methyl-1-propen-1,3-sultone, 3-methyl-1-propen-1,3-sultone, 1-methyl-2-propen-1,3-sultone, 2-methyl-2-propen-1,3-sultone, 3-methyl-2-propen-1,3-sultone, 1,4-butanesultone and 1,5-pentanesultone; and disulfonate compounds such as methylene methanedisulfonate and ethylene methanedisulfonate.

The sulfate compound may be, such as 1,2-ethanediol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate and 1,5-pentanediol sulfate, ethylene sulfite, propylene sulfite, ethylene sulfate, propylene sulfate, butylene sulfate, hexylene sulfate, vinylene sulfate, 3-sulfolene, divinyl sulfone, dimethyl sulfate, diethyl sulfate, and the like.

The compound having the isocyanate group may be, such as methyl isocyanate, ethyl isocyanate, propyl isocyanate, isopropyl isocyanate, butyl isocyanate, tert-butyl isocyanate, pentyl isocyanate, hexyl isocyanate, cyclohexyl isocyanate, vinyl isocyanate, allyl isocyanate, triallyl isocyanurate, ethynyl isocyanate, propynyl isocyanate, phenyl isocyanate, and fluorophenyl isocyanate.

Preferably, the second additive is one or more selected from the group consisting of vinylene carbonate, fluoroethylene carbonate, lithium difluorophosphate, lithium bis(oxalato)borate, lithium difluoro(oxalato)borate, 1,3-propanesultone, triallyl isocyanurate, methylene methanedisulfonate, vinyl sulfate, triallyl phosphate, tripropynyl phosphate, tris(trimethylsilanyl) phosphate, and tris(trimethylsilanyl) borate.

More preferably, the second additive is one or more selected from the group consisting of vinylene carbonate, fluoroethylene carbonate, lithium difluorophosphate, lithium difluoro(oxalato)borate, triallyl isocyanurate, triallyl phosphate, and tripropynyl phosphate.

The mass of the second additive accounts for 0.01-10% of the total mass of the electrolyte solution; preferably, the mass of the second additive accounts for 0.1-8% of the total mass of the electrolyte solution; and more preferably, the mass of the second additive accounts for 0.5-5.5% of the total mass of the electrolyte solution.

### <Non-aqueous Solvent>

In one embodiment, the mass of the non-aqueous solvent accounts for 67-91% of the total mass of the electrolyte solution; preferably, the mass of the non-aqueous solvent accounts for 77-87% of the total mass of the electrolyte solution.

The non-aqueous solvent can be appropriately selected from various non-aqueous solvents, and it is preferable to use at least one selected from a cyclic aprotic solvent and a chain aprotic solvent, so as to improve the solubility, stability, and conductivity of the non-aqueous solvent.

As the cyclic aprotic solvent, cyclic ester, cyclic sulfone, or cyclic ether may be used.

Examples of the cyclic sulfone include, but are not limited to, sulfolane, 2-methylsulfolane, 3-methylsulfolane, dimethylsulfone, diethylsulfone, dipropylsulfone, methylethylsulfone, methylpropylsulfone, and the like.

Examples of the cyclic ether include, but are not limited to, dioxolane.

The cyclic ester may be, such as cyclic carbonates and cyclic carboxylates.

In the present invention, the type of the cyclic carbonate is not limited, and includes, but is not limited to, chain carbonates such as methyl vinyl carbonate, ethyl vinyl carbonate, divinyl carbonate, methyl allyl carbonate, ethyl allyl carbonate, diallyl carbonate, methyl propynyl carbonate, ethyl propynyl carbonate, dipropynyl carbonate, methyl phenyl carbonate, ethyl phenyl carbonate, and diphenyl carbonate; vinylene carbonate, methylvinylene carbonate, 4,4-dimethylvinylene carbonate, 4,5-dimethylvinylene carbonate, vinylethylene carbonate, 4,4-divinylethylene carbonate, 4,5-divinylethylene carbonate, allylethylene carbonate, 4,4-diallylethylene carbonate, 4,5-diallylethylene carbonate, methyleneethylene carbonate, 4,4-dimethyl-5-methyleneethylene carbonate, ethynylethylene carbonate, 4,4-diethynylethylene carbonate, 4,5-diethynylethylene carbonate, propynyl ethylene carbonate, 4,4-dipropynylethylene carbonate, 4,5-dipropynylethylene carbonate, phenylethylene carbonate, 4,5-diphenylethylene carbonate, phenylene carbonate, fluorocarbonic acid, fluoroethylene carbonate, trifluoroethylene carbonate, tetrafluorovinyl ester, trifluoropropylene carbonate, and the like.

In the present invention, the cyclic carboxylate is not limited, and includes, but is not limited to, γ-butyrolactone, methyl γ-butyrolactone, ethyl γ-butyrolactone, γ-valerolactone, γ-caprolactone, γ-heptanolactone, δ-valerolactone, ethyl δ-valerolactone, and the like.

Preferably, the cyclic ester is at least one selected from the group consisting of ethylene carbonate, propylene carbonate, γ-butyrolactone, and butylene carbonate.

As the chain aprotic solvent, chain ester, chain ether, etc. can be used.

Specifically, the chain ether may be, such as dimethoxyethane, and the like.

The chain ester may be, such as cyclic carbonate, cyclic carboxylate, and chain phosphate.

In the present invention, the type of the chain carboxylate is not limited, and includes, but is not limited to, dimethyl carbonate, diethyl carbonate, methyl ethyl carbonate, methyl ethyl carbonate, methyl acetate, ethyl acetate, propyl acetate, methyl propionate, methyl butyrate, methyl isobutyrate, methyl trimethylacetate, ethyl trimethylacetate, methyl malonate, ethyl malonate, methyl succinate, ethyl succinate, methyl 3-methoxypropionate, ethyl 3-methoxypropionate, ethylene glycol diacetate, propylene glycol diacetate, 2,2-difluoroethyl acetate, and the like.

In the present invention, the type of the chain carbonate is not limited, and includes, but is not limited to, dimethyl carbonate, methyl ethyl carbonate, diethyl carbonate, methyl propyl carbonate, ethyl propyl carbonate, dipropyl carbonate, diethylcarbonate, and the like.

In the present invention, the type of the chain phosphate is not limited, and includes, but is not limited to, trimethyl phosphate, triethyl phosphate, triphenyl phosphate, and the like.

Preferably, the chain ester is at least one selected from the group consisting of dimethyl carbonate, diethyl carbonate, diethylcarbonate, dipropyl carbonate, methyl ethyl carbonate, methyl propyl carbonate, ethyl propyl carbonate, methyl formate, ethyl formate, propyl formate, methyl acetate, ethyl acetate, propyl acetate, methyl propionate, ethyl propionate, propyl propionate, and 2,2-difluoroethyl acetate.

In one embodiment, the weight ratio of the cyclic ester to the chain ester is 1:(1-5); preferably, in one embodiment, the weight ratio of the cyclic ester to the chain ester is 1 :(1-2.5).

### <Electrolyte>

The electrolyte used in the non-aqueous electrolyte solution of the present invention is not limited, which is used as an electrolyte in the target non-aqueous electrolyte secondary battery. In the present invention, any well known electrolyte can be used . When the non-aqueous electrolyte solution of the present invention is used in a lithium secondary battery, a lithium salt is generally used as the electrolyte.

The lithium salt may be inorganic lithium salt such as LiPF₆, LiBF₄, LiClO₄, LiAlF₄, LiSbF₆, LiTaF₆, and LiWF₇; lithium tungstate such as LiWOFs; lithium carboxylate such as HCO₂Li, CH₃CO₂Li, CH₂FCO₂Li, CHF₂CO₂Li, CF₃CO₂Li, CF₃CH₂CO₂Li, CF₃CF₂CO₂Li, CF₃CF₂CF₂CO₂Li, and CF₃CF₂CF₂CF₂CO₂Li; lithium sulfonates such as FSO₃Li, CH₃SO₃Li, CH₂FSO₃Li, CHF₂SO₃Li, CF₃SO₃Li, CF₃CF₂SO₃Li, CF₃CF₂CF₂SO₃Li, and CF₃CF₂CF₂CF₂SO₃Li; lithium imide salt such as LiN(FCO)₂, LiN(FCO)(FSO₂), LiN(FSO₂)₂, LiN(FSO₂)(CF₃SO₂), LiN(CF₃SO₂)₂, LiN(C₂F₅SO₂)₂, cyclic lithium 1,2-perfluoroethane disulfonimide, cyclic lithium 1,3-perfluoropropane disulfonimide, and LiN(CF₃SO₂)(C₄F₉SO₂); methylated lithium salt such as LiC(FSO₂)₃, LiC(CF₃SO₂)₃, and LiC(C₂F₅SO₂)₃; lithium malonatoborate salt such as lithium bis(malonato)borate and lithium difluoro(malonato)borate; lithium malonatophosphate salt such as lithium tris(malonato)phosphate, lithium difluorobis(malonato)phosphate, and lithium tetrafluoro(malonato)phosphate; fluorine-containing organic lithium salt such as LiPF₄(CF₃)₂, LiPF₄(C₂F₅)₂, LiPF₄(CF₃SO₂)₂, LiPF₄(C₂F₅SO₂)₂, LiBF₃CF₃, LiBF₃C₂F₅, LiBF₃C₃F₇, LiBF₂(CF₃)₂, LiBF₂(C₂F₅)₂, LiBF₂(CF₃SO₂)₂, and LiBF₂(C₂F₅SO₂)₂; and lithium oxalatoborate salt such as lithium difluoro(oxalato)borate and lithium bis(oxalato)borate as lithium salts.

Preferably, ihe lithium salt is at least one selected from the group consisting of LiSbF₆, lithium bis(fluorosulfonyl)imide, and lithium bis(trifluoromethanesulfonyl)imide.

In one embodiment, the mass of the lithium salt accounts for 8-18% of the total mass of the electrolyte solution.

In the second aspect of the present invention, provided is a secondary lithium-ion battery, comprising a positive electrode, a negative electrode and the electrolyte solution.

### [Battery]

The secondary lithium-ion battery of the present invention is any one selected from the group consisting of lithium-ion battery, lithium-sulfur battery, and lithium air battery, wherein lithium-ion battery, lithium-sulfur battery and lithium air battery are technical terms well known to those skilled in the art. The shape and type of the secondary lithium-ion battery of the present invention are not particularly limited, and may be secondary lithium-ion battery, such as lithium-ion battery, lithium-ion polymer battery and lithium-sulfur battery, and primary lithium battery. The lithium battery can be manufactured by means of a manufacturing method known in the related art.

### <Positive Electrode Active Substance>

The positive electrode contains a positive electrode active substance capable of occluding and releasing lithium.

The positive electrode active substance is not particularly limited, as long as it is a substance capable of occluding and releasing lithium ions in an electrochemical manner. A substance containing lithium and at least one transition metal is preferred, such as lithium-transition metal complex oxide and lithium-containing transition metal phosphate compound.

Preferably, the transition metal used in the lithium-transition metal complex oxide is selected from V, Ti, Cr, Mn, Fe, Co, Ni, Cu, and the like. As specific examples, lithium-cobalt complex oxides such as LiCoO₂; lithium-nickel complex oxides such as LiNiO₂; lithium-manganese complex oxides such as LiMnO₂, LiMn₂O₄, and Li₂MnO₃; substances obtained by replacing some of the transition metal atoms in the main body of these lithium-transition metal complex oxides with other metals such as Al, Ti, V, Cr, Mn, Fe, Co, Li, Ni, Cu, Zn, Mg, Ga, Zr, and Si can be listed. Substances obtained by above replacement may be LiNi_{0.5}Mn_{0.5}O₂, LiNi_{0.85}Co_{0.10}Al_{0.05}O₂, LiNi_{0.33}Co_{0.33}Mn_{0.33}O₂, LiMn_{1.8}Al_{0.2}O₄, LiMn_{1.5}Ni_{0.5}O₄, and the like.

Preferably, the transition metal used in the lithium-containing transition metal phosphate compound is selected from V, Ti, Cr, Mn, Fe, Co, Ni, Cu, and the like. As specific examples, iron phosphates such as LiFePO₄, Li₃Fe₂(PO₄)₃, and LiFeP₂O₇; cobalt phosphates such as LiCoPO₄; substances obtained by replacing some of the transition metal atoms in the main body of these lithium-containing transition metal phosphate compounds with other metals such as Al, Ti, V, Cr, Mn, Fe, Co, Li, Ni, Cu, Zn, Mg, Ga, Zr, Nb, and Si can be listed.

Preferably, the positive electrode active substance is selected from Li₁₊ₐ(NiₓCo_{y}M_{1-x-y})O₂, Li(NiₙMnₘCo₂₋ₙ₋ₘ)O₄, and LiMₚ(PO₄)_{q}, wherein 0≤a≤0.3, 0≤x≤1, 0≤y≤1, 0≤x+y≤1, 0≤n≤2, 0≤m≤2, 0≤n+m≤2, M is any one selected from the the group consisting of Al, Fe, Ni, Co, Mn, and V, 0<p<5, and 0<q<5.

### <Binder-1>

The binder used during the manufacturing of the positive electrode active substance layer is not particularly limited as long as it is a material capable of being dissolved or dispersed in a liquid medium used during the manufacturing of electrode where a coating method is used. The binder may be resin polymers such as polyethylene, polypropylene, polyethylene terephthalate, polymethyl methacrylate, aromatic polyamide, cellulose, and nitrocellulose; rubbery polymers such as SBR (styrene-butadiene rubber), NBR (acrylonitrile-butadiene rubber), fluororubbers, isoprene rubber, butadiene rubber, and ethylene-propylene rubber; thermoplastic elastomeric polymers such as styrene-butadiene-styrene block copolymer or a hydrogenated product thereof, EPDM (ethylene-propylene-diene monomer copolymer), styrene-ethylene-butadiene-ethylene copolymer, and styrene-isoprene-styrene block copolymer or a hydrogenated product thereof; soft resinous polymers such as syndiotactic 1,2-polybutadiene, polyvinyl acetate, ethylene-vinyl acetate copolymer, and propylene-α-olefin copolymer; fluorine polymers such as polyvinylidene fluoride (PVDF), polytetrafluoroethylene, fluorinated polyvinylidene fluoride, and polytetrafluoroethylene-ethylene copolymer; and polymer compositions having ionic conductivity with regard to alkali metal ions (especially lithium ions). In addition, these substances may be used alone, or two or more substances may be used in any combination and at any ratio.

If the proportion of the binder in the positive electrode active substance layer is too low, the positive electrode active substance cannot be sufficiently maintained, leading to insufficient mechanical strength of the positive electrode, and deteriorated battery performance such as cycle performance. On the other hand, if the proportion of the binder is too high, battery capacity or conductivity may be reduced sometimes.

### <Slurry Formation Solvent-1>

The type of the slurry formation solvent is not particularly limited, as long as it can dissolve or disperse the positive electrode active substance, the conductive material, the binder, and a thickener used as needed. Any aqueous solvents and organic solvents can be used. The aqueous solvent may be, such as water, a mixed medium of an alcohol and water, and the like. The organic solvent may be aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide and tetrahydrofuran (THF); amides such as N-methylpyrrolidone (NMP), dimethylformamide, and dimethylacetamide; polar aprotic solvents such as hexamethylphosphoramide and dimethylsulfoxide.

In the present invention, the positive electrode can be manufactured by forming a positive electrode active substance layer containing the positive electrode active substance and the binder on a current collector. The positive electrode containing the positive electrode active substance can be manufactured by a conventional method. For example, the positive electrode active substance and the binder, as well as a conductive material, a thickener etc. used as needed, can be dry mixed and made into a sheet, and the sheet material is then pressed on a positive electrode current collector to obtain the positive electrode; or these materials are dissolved or dispersed in a liquid medium to prepare a slurry, and the slurry is applied to a positive electrode current collector and dried to form a positive electrode active substance layer on the current collector, thereby obtaining the positive electrode.

### <Negative Electrode Active Substance>

The negative electrode contains a negative electrode active substance capable of occluding and releasing lithium.

The negative electrode active substance may be one or more selected from the group consisting of metal lithium, lithium-containing alloy, metal or alloy capable of being alloyed with lithium, oxide capable of doping/undoping lithium ion, transition metal nitride capable of doping/undoping lithium ion, and carbon material capable of doping/undoping lithium ion.

Preferably, the negative electrode active substance is one or more selected from the group consisting of metal lithium, lithium alloy, carbon material, silicon or tin and oxides thereof.

### <Binder-2>

The binder using for binding the negative electrode active substance is not particularly limited, as long as it is a material that is stable in non-aqueous electrolyte solution and the solvent used during the manufacturing of the the electrode.

The binder may be resin polymers such as polyethylene, polypropylene, polyethylene terephthalate, polymethyl methacrylate, aromatic polyamide, polyimide, cellulose, and nitrocellulose; rubbery polymers such as SBR (butadiene styrene rubber), isoprene rubber, butadiene rubber, fluororubbers, NBR (nitrile butadiene rubber), and ethylene propylene rubber; styrene-butadiene-styrene block copolymer or a hydrogenated product thereof; thermoplastic elastomeric polymers such as EPDM (ethylene-propylene-diene monomer copolymer), styrene-ethylene-butadiene-styrene copolymer, and styrene-isoprene-styrene block copolymer or a hydrogenated product thereof; soft resinous polymers such as syndiotactic 1,2-polybutadiene, polyvinyl acetate, ethylene-vinyl acetate copolymer, and propylene-α-olefin copolymer; fluorine polymers such as polyvinylidene fluoride, polytetrafluoroethylene, fluorinated polyvinylidene fluoride, and polytetrafluoroethylene-ethylene copolymer; and polymer compositions having ionic conductivity with regard to alkali metal ions (especially lithium ions). These binders may be used alone, or two or more binders may be used in any combination and at any ratio.

### <Slurry Formation Solvent-2>

The type of the slurry formation solvent is not particularly limited, as long as it can dissolve or disperse the negative electrode active substance, the binder, and the thickener and conductive material used as needed. Any aqueous solvents and non-aqueous solvents can be used.

The aqueous solvents may be selected from water, alcohol, and the like. The non-aqueous solvents may be selected from N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, hexamethylphosphoramide, dimethylsulfoxide, benzene, xylene, quinoline, pyridine, methylnaphthalene, hexane, and the like.

In particular, when using an aqueous solvent, it is preferable that a dispersant etc. are contained therein and a thickener is used, and a latex such as SBR is used for slurrying. It should be noted that these solvents may be used alone, or two or more solvents may be used in any combination and at any ratio.

### <Thickener>

A thickener is usually used for adjusting the viscosity of the slurry. The thickener is not particularly limited, and may be such as carboxymethyl cellulose, methyl cellulose, hydroxymethyl cellulose, ethyl cellulose, polyvinyl alcohol, oxidized starch, phosphorylated starch, casein, and salts thereof. These thickeners may be used alone, or two or more thickeners may be used in any combination and at any ratio.

When the thickener is in an appropriate range with respect to the negative electrode active substance, the decrease in battery capacity and the increase in resistance can be suppressed, and good coating properties can be ensured.

The negative electrode of the present invention can be manufactured by means of any well known method to the extent that the effect of the present invention is not significantly impaired. For example, the binder, the solvent, and the thickener and the conductive material etc. added as needed, may be added to the negative electrode active substance to prepare a slurry, and the slurry is applied to a current collector, dried, and then pressed to form the electrode.

The present invention will be described in detail by the following examples. It is necessary to indicate here that the following examples are only used for further illustrating the present invention, and cannot be construed as limiting the scope of protection of the present invention. Some non-essential improvements and adjustments made by those skilled in the art based on the above-mentioned content of the present invention still fall within the scope of protection of the present invention.

### EXAMPLE

The technical solution of the present invention will be described in detail through examples below, but it is not intended to limit the present invention.

The structural formulas of the compounds involved in the examples are as follows:

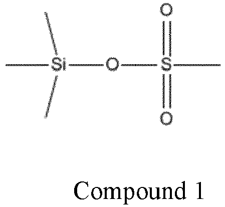

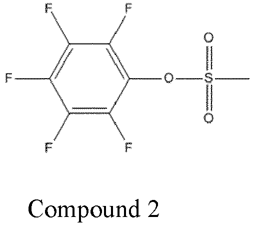

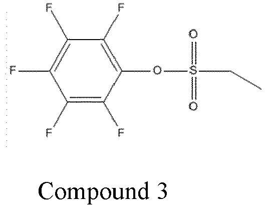

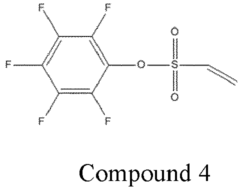

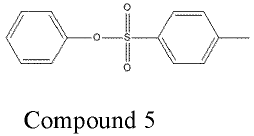

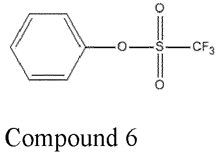

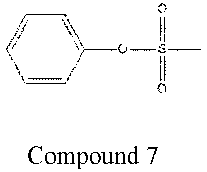

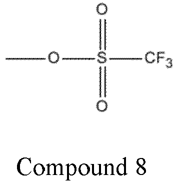

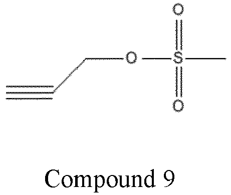

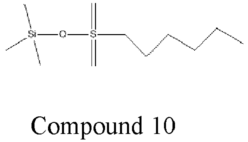

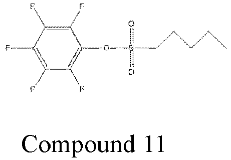

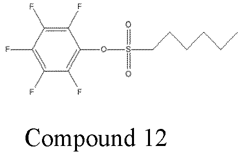

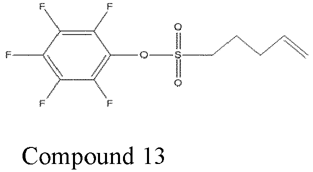

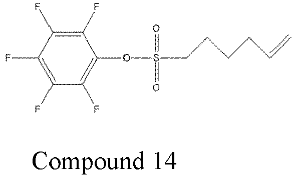

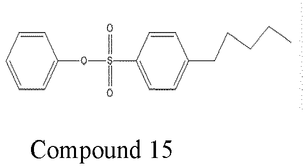

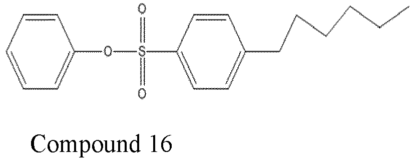

### Example 1

A secondary lithium-ion battery was provided in Example 1 of the present invention, the preparation method of which was as follows:
(1) Preparation of a positive electrode sheet of secondary lithium-ion battery
   Lithium nickel-cobalt-manganese oxide (LiNi_{1/3}Co_{1/3}Mn_{1/3}O₂) as a positive electrode active material, Super-P as a conductive agent, and PVDF as a binder were dissolved in N-methylpyrrolidone as a solvent at a mass ratio of 96:2.0:2.0 and mixed uniformly to prepare a positive electrode slurry. The positive electrode slurry was uniformly applied to a current collector aluminum foil with a coating amount of 0.018 g/cm², dried at 85°C, subjected to cold pressing, trimming, cutting, and slitting, dried under vacuum condition at 85°C for 4 h, and then welded with a tab, to obtain the positive electrode sheet of secondary lithium-ion battery that met requirements.
(2) Preparation of a negative electrode sheet of l secondary lithium-ion battery
   Graphite as a negative electrode active material, Super-P as a conductive agent, CMC as a thickener, and SBR as a binder were dissolved in deionized water as a solvent at a mass ratio of 96.5:1.0:1.0:1.5 and mixed uniformly to prepare a negative electrode slurry. The negative electrode slurry was uniformly applied to a current collector copper foil with a coating amount of 0.0089 g/cm², dried at 85°C, subjected to cold pressing, trimming, cutting, and slitting, dried under vacuum condition at 110°C for 4 h, and then welded with a tab, to obtain the negative electrode sheet of lithium secondary battery that met requirements.
(3) Preparation of electrolyte solution of secondary lithium-ion battery
   The electrolyte solution of secondary lithium-ion battery comprised, based on the total mass of the electrolyte solution, 12.5% of lithium hexafluorophosphate as a lithium salt and 81.5% of a mixture of ethylene carbonate, methyl ethyl carbonate, and diethyl carbonate as a non-aqueous organic solvent, wherein the mass ratio of ethylene carbonate to methyl ethyl carbonate to diethyl carbonate was 3:5:2. The electrolyte solution of secondary lithium-ion battery further comprised an additive, wherein the additive was compound 1, which accounted for 3.0% of the total mass of the electrolyte solution of secondary lithium-ion battery. In addition, the electrolyte solution of secondary lithium-ion battery also comprised a second additive that was selected from vinylene carbonate and 1,3-propanesultone, which respectively accounted for 1.0% and 2.0% of the total mass of the electrolyte solution.
(4) Preparation of secondary lithium-ion battery
   The positive and negative electrode sheets of secondary lithium-ion battery prepared according to the foregoing method and a separator were wound into a cell with a thickness of 8 mm, a width of 60 mm and a length of 130 mm. The cell was vacuum baked at 75°C for 10 h, injected with the electrolyte solution, placed for 24 h, charged to 4.2 V at a constant current of 0.1 C (160 mA), then charged at a constant voltage of 4.2 V until the current dropped to 0.05 C (80 mA), then discharged to 3.0 V at a constant current of 0.1 C (160 mA), repeating the charge and discharge operation twice, and finally charged to 3.8 V at a constant current of 0.1 C (160 mA), such that the secondary lithium-ion battery of Example 1 was obtained.

### Example 2

Example 2 of the present invention provided a secondary lithium-ion battery. The preparation method of secondary lithium-ion battery of Example 2 was similar to that of Example 1, except that: the electrolyte solution of secondary lithium-ion battery comprised, based on the total mass of the electrolyte solution, 10.0% of lithium hexafluorophosphate as a lithium salt and 87.0% of a mixture of ethylene carbonate and methyl ethyl carbonate at a mass ratio of 1:2 as a non-aqueous organic solvent; Compound 2 was added, which accounted for 1.0% of the total mass of the electrolyte solution; the second additive was lithium difluorophosphate, which accounted for 1.0% of the total mass of the electrolyte solution; and the positive electrode material used for the secondary lithium-ion battery was LiNi_{0.8}Co_{0.1}Mn_{0.1}O₂.

### Example 3

Example 3 of the present invention provided a secondary lithium-ion battery. The preparation method of secondary lithium-ion battery of Example 3 was similar to that of Example 1, except that the non-aqueous organic solvent was a mixture of ethylene carbonate and methyl ethyl carbonate at a mass ratio of 1:3, which accounted for 83.0% of the total mass of the electrolyte solution; Compound 3 was added, which accounted for 1.0% of the total mass of the electrolyte solution; the second additive was vinylene carbonate and fluoroethylene carbonate, which respectively accounted for 0.5% and 3.0% of the total mass of the electrolyte solution; the positive electrode material used for the secondary lithium-ion battery was LiNi_{0.8}Co_{0.15}Al_{0.05}O₂.

### Example 4

Example 4 of the present invention provided a secondary lithium-ion battery. The preparation method of secondary lithium-ion battery of Example 4 was similar to that of Example 1, except that: the non-aqueous organic solvent was a mixture of ethylene carbonate and diethyl carbonate at a mass ratio of 1:2, which accounted for 84.0% of the total mass of the electrolyte solution; Compound 4 was added, which accounted for 2.5% of the total mass of the electrolyte solution; the second additive was lithium difluoro(oxalato)borate and fluoroethylene carbonate, which respectively accounted for 0.5% and 5.0% of the total mass of the electrolyte solution; the positive electrode material used for the secondary lithiumion battery was LiCoO₂, and the negative electrode material was silicon-carbon composite material.

### Example 5

Example 5 of the present invention provided a secondary lithium-ion battery. The preparation method of secondary lithium-ion battery of Example 5 was similar to that of Example 1, except that: the electrolyte solution of secondary lithium-ion battery comprised, based on the total mass of the electrolyte solution, 15% of lithium hexafluorophosphate as a lithium salt and 81.5% of a mixture of ethylene carbonate, propylene carbonate and diethyl carbonate at a mass ratio of 4:1:5 as a non-aqueous organic solvent; Compound 5 was added, which accounted for 1.0% of the total mass of the electrolyte solution; the second additive was vinylene carbonate and tripropynyl phosphate, which respectively accounted for 0.5% and 2.0% of the total mass of the electrolyte solution; the positive electrode material used for the secondary lithium-ion battery was LiNi_{0.8}Co_{0.15}Al_{0.05}O₂, and the negative electrode material was lithium titanate; the charge cut-off voltage of the secondary lithium-ion battery was 2.7 V.

### Example 6

Example 6 of the present invention provided a secondary lithium-ion battery. The preparation method of secondary lithium-ion battery of Example 6 was similar to that of Example 1, except that: the non-aqueous organic solvent was a mixture of ethylene carbonate, methyl ethyl carbonate and diethyl carbonate at a mass ratio of 3:5:2, which accounted for 83.5% of the total mass of the electrolyte solution; Compound 6 was added, which accounted for 0.5% of the total mass of the electrolyte solution; the second additive was triallyl phosphate and fluoroethylene carbonate, which respectively accounted for 1.0% and 3.0% of the total mass of the electrolyte solution; the positive electrode material used for the secondary lithium-ion battery was LiCoO₂.

### Example 7

Example 7 of the present invention provided a secondary lithium-ion battery. The preparation method of secondary lithium-ion battery of Example 7 was similar to that of Example 1, except that: the electrolyte solution of secondary lithium-ion battery comprised, based on the total mass of the electrolyte solution, 17.5% of lithium hexafluorophosphate as a lithium salt and 78.0% of a mixture of ethylene carbonate, methyl ethyl carbonate and diethyl carbonate at a mass ratio of 3:5:2 as a non-aqueous organic solvent; Compound 7 was added, which accounted for 4.0% of the total mass of the electrolyte solution; the second additive was lithium difluorophosphate, which accounted for 0.5% of the total mass of the electrolyte solution; the positive electrode material used for the secondary lithium-ion battery was LiMn₂O₄, and the negative electrode material was lithium titanate.

### Example 8

Example 8 of the present invention provided a secondary lithium-ion battery. The preparation method of secondary lithium-ion battery of Example 8 was similar to that of Example 1, except that: the non-aqueous organic solvent was a mixture of ethylene carbonate, methyl ethyl carbonate and diethyl carbonate at a mass ratio of 3:5:2, which accounted for 83.5% of the total mass of the electrolyte solution; Compound 8 was added, which accounted for 1.0% of the total mass of the electrolyte solution; the second additive was triallyl isocyanurate and lithium difluorophosphate, which respectively accounted for 0.5% and 3.0% of the total mass of the electrolyte solution; the positive electrode material used for the secondary lithium-ion battery was LiMnO₂.

### Example 9

Example 9 of the present invention provided a secondary lithium-ion battery. The preparation method of secondary lithium-ion battery of Example 9 was similar to that of Example 1, except that: the electrolyte solution of lithium secondary battery comprised, based on the total mass of the electrolyte solution, 15% of lithium hexafluorophosphate as a lithium salt and 77.5% of a mixture of ethylene carbonate, propylene carbonate and diethyl carbonate at a mass ratio of 4:1:5 as a non-aqueous organic solvent; Compound 9 was added, which accounted for 5.0% of the total mass of the electrolyte solution; the second additive was vinylene carbonate and tripropynyl phosphate, which respectively accounted for 0.5% and 2.0% of the total mass of the electrolyte solution; the positive electrode material used for the secondary lithium-ion battery was LiNi_{0.8}Co_{0.15}Al_{0.05}O₂, and the negative electrode material was lithium titanate; the charge cut-off voltage of the secondary lithium-ion battery was 2.7 V.

### Example 10

Example 10 of the present invention provided a secondary lithium-ion battery. The preparation method of secondary lithium-ion battery of Example 10 was similar to that of Example 2, except that no second additive was added.

### Example 11

Example 11 of the present invention provided a secondary lithium-ion battery. The preparation method of secondary lithium-ion battery of Example 11 was similar to that of Example 1, except that: the electrolyte solution of lithium secondary battery comprised, based on the total mass of the electrolyte solution, 15% of lithium trifluoromethanesulfonimide as a lithium salt and 81.5% of a mixture of ethylene carbonate, ethyl acetate and diethyl carbonate at a mass ratio of 4:1:5 as a non-aqueous organic solvent; Compound 11 was added, which accounted for 1.0% of the total mass of the electrolyte solution; the second additive was triallyl phosphate and methylene methanedisulfonate, which respectively accounted for 0.5% and 2.0% of the total mass of the electrolyte solution; the positive electrode material used for the secondary lithium-ion battery was LiNi0.8Co0.15Al0.05O2, and the negative electrode material was lithium titanate; the charge cut-off voltage of the secondary lithium-ion battery was 2.7 V.

### Example 12

Example 12 of the present invention provided a secondary lithium-ion battery. The preparation method of secondary lithium-ion battery of Example 12 was similar to that of Example 1, except that: the non-aqueous organic solvent was a mixture of ethylene carbonate, methyl ethyl carbonate, methyl propionate, and ethyl 2,2-difluoroethylacetate at a mass ratio of 3:4:2:1, whihc accounted for 83.5% of the total mass of the electrolyte solution; Compound 13 was added, which accounted for 0.5% of the total mass of the electrolyte solution; the second additive was lithium bis(oxalato)borate and tris(trimethylsilanyl) phosphate, which respectively accounted for 1.0% and 3.0% of the total mass of the electrolyte solution; the positive electrode material used for the secondary lithium-ion battery was LiCoO2.

### Example 13

Example 13 of the present invention provided a secondary lithium-ion battery. The preparation method of secondary lithium-ion battery of Example 13 was similar to that of Example 1, except that: the electrolyte solution of lithium secondary battery comprised, based on the total mass of the electrolyte solution, 17.5% of lithium trifluorosulfonimide as a lithium salt and 78.0% of a mixture of ethylene carbonate, methyl ethyl carbonate and propyl propionate at a mass ratio of 3:5:2 as a non-aqueous organic solvent; Compound 15 was added, which accounted for 4.0% of the total mass of the electrolyte solution; the second additive was tris(trimethylsilanyl)borate, which accounted for 0.5% of the total mass of the electrolyte solution; the positive electrode material used for the secondary lithium-ion battery was LiMn2O4, and the negative electrode material was lithium titanate.

### Comparative Example 1

Comparative Example 1 of the present invention provided a secondary lithium-ion battery. The preparation method of secondary lithium-ion battery of Comparative Example 1 was similar to that of Example 1, only except that Compound 1 was not added to the electrolyte solution of secondary lithium-ion battery.

### Comparative Example 2

Comparative Example 2 of the present invention provided a secondary lithium-ion battery. The preparation method of secondary lithium-ion battery of Comparative Example 2 was similar to that of Example 2, only except that Compound 2 was not added to the electrolyte solution of secondary lithium-ion battery.

### Comparative Example 3

Comparative Example 3 of the present invention provided a secondary lithium-ion battery. The preparation method of secondary lithium-ion battery of Comparative Example 3 was similar to that of Example 3, only except that Compound 3 was not added to the electrolyte solution of secondary lithium-ion battery.

### Comparative Example 4

Comparative Example 4 of the present invention provided a secondary lithium-ion battery. The preparation method of secondary lithium-ion battery of Comparative Example 4 was similar to that of Example 4, only except that Compound 4 was not added to the electrolyte solution of secondary lithium-ion battery.

### Comparative Example 5

Comparative Example 5 of the present invention provided a secondary lithium-ion battery. The preparation method of secondary lithium battery of Comparative Example 5 was similar to that of Example 5, only except that Compound 5 was not added to the electrolyte solution of secondary lithium battery.

### Comparative Example 6

Comparative Example 6 of the present invention provided a secondary lithium-ion battery. The preparation method of secondary lithium-ion battery of Comparative Example 6 was similar to that of Example 6, only except that Compound 6 was not added to the electrolyte solution of secondary lithium-ion battery.

### Comparative Example 7

Comparative Example 7 of the present invention provided a secondary lithium-ion battery. The preparation method of secondary lithium-ion battery of Comparative Example 7 was similar to that of Example 7, only except that Compound 7 was not added to the electrolyte solution of secondary lithium-ion battery.

### Comparative Example 8

Comparative Example 8 of the present invention provided a secondary lithium-ion battery. The preparation method of secondary lithium-ion battery of Comparative Example 8 was similar to that of Example 8, only except that Compound 8 was not added to the electrolyte solution of secondary lithium-ion battery.

### Comparative Example 9

Comparative Example 9 of the present invention provided a secondary lithium-ion battery. The preparation method of secondary lithium-ion battery of Comparative Example 9 was similar to that of Example 9, only except that Compound 9 was not added to the electrolyte solution of secondary lithium-ion battery.

### Comparative Example 10

Comparative Example 10 of the present invention provided a secondary lithium-ion battery. The preparation method of secondary lithium-ion battery of Comparative Example 10 was similar to that of Example 1, only except that Compound 10 was added to the electrolyte solution of secondary lithium-ion battery.

### Comparative Example 11

Comparative Example 11 of the present invention provided a secondary lithium-ion battery. The preparation method of secondary lithium-ion battery of Comparative Example 11 was similar to that of Example 11, only except that Compound 12 was added to the electrolyte solution of secondary lithium-ion battery.

### Comparative Example 12

Comparative Example 12 of the present invention provided a secondary lithium-ion battery. The preparation method of secondary lithium-ion battery of Comparative Example 12 was similar to that of Example 12, only except that Compound 14 was added to the electrolyte solution of secondary lithium-ion battery.

### Comparative Example 13

Comparative Example 13 of the present invention provided a secondary lithium-ion battery. The preparation method of secondary lithium-ion battery of Comparative Example 13 was similar to that of Example 13, only except that Compound 16 was added to the electrolyte solution of secondary lithium-ion battery.

### Performance Test

The following experiments were performed on the batteries obtained in Comparative Examples 1-13 and Examples 1-13:
1. Cycling Experiment: The batteries obtained in Comparative Examples 1-13 and Examples 1-13 were respectively tested for the internal resistance at room temperature, 25°C. The batteries were subjected to a cycling test of charge and discharge at a charge-discharge rate of 2CC/0.5CD at 25°C, a cycling test of charge and discharge at a charge-discharge rate of 0.5CC/0.2CD at a low temperature of -10°C, and a cycling test of charge and discharge at a charge-discharge rate of 0.5CC/0.5CD at a high temperature of 45°C. The discharge capacity of the last cycle was recorded and divided by the discharge capacity of the first cycle to obtain the capacity retention rate, and the results were as shown in Table 1.
2. High-temperature Storage Experiment: The batteries obtained in Comparative Examples 1-13 and Examples 1-13 were first charged and discharged at room temperature at a charge-discharge rate of 0.5C/0.5C with a voltage of 3.0-4.2 V for three times, and then charged to 4.2 V at 0.5 C, and the thicknesses of the batteries were recorded. The batteries were placed in ovens at 60°C for 15 days, and the thicknesses of the batteries were recorded. The expansion rate of the battery was calculated by the thickness of the battery recorded for the second time divided by the thickness of the battery recorded for the first. The results were as shown in Table 1.

**Table 1 Performance test results**

| | Internal resistance (mΩ) | Capacity retention rate after 50 cycles at -10°C | Capacity retention rate after 500 cycles at 25°C | Capacity retention rate after 500 cycles at 45°C | Expansion rate of battery after high temperature storage |
|---|---|---|---|---|---|
| Example 1 | 17 | 82.9% | 95.9% | 86.9% | 2.9% |
| Example 2 | 18 | 81.3% | 92.2% | 82.6% | 2.9% |
| Example 3 | 16 | 80.5% | 92.4% | 83.8% | 3.2% |
| Example 4 | 15 | 82.3% | 89.8% | 82.1% | 5.1% |
| Example 5 | 17 | 84.1% | 97.8% | 91.4% | 3.7% |
| Example 6 | 15 | 80.9% | 93.9% | 89.1% | 3.3% |
| Example 7 | 18 | 80.2% | 94.0% | 87.1% | 3.5% |
| Example 8 | 15 | 82.6% | 97.1% | 87.7% | 3.8% |
| Example 9 | 16 | 83.8% | 94.7% | 86.9% | 3.7% |
| Example 10 | 16 | 81.4% | 92.1% | 81.8% | 3.5% |
| Example 11 | 15 | 83.2% | 94.5% | 83.4% | 3.2% |
| Example 12 | 16 | 83.5% | 95.6% | 85.6% | 3.4% |
| Example 13 | 15 | 84.6% | 96.7% | 83.5% | 2.7% |
| Comparative Example 1 | 23 | 68.7% | 84.4% | 75.6% | 8.8% |
| Comparative Example 2 | 25 | 65.6% | 76.3% | 63.9% | 16.7% |
| Comparative Example 3 | 23 | 65.0% | 77.4% | 71.4% | 18.5% |
| Comparative Example 4 | 25 | 62.7% | 72.9% | 61.8% | 27.2% |
| Comparative Example 5 | 24 | 67.5% | 82.7% | 73.2% | 16.3% |
| Comparative Example 6 | 23 | 68.9% | 79.5% | 73.1% | 17.0% |
| Comparative Example 7 | 27 | 67.4% | 84.1% | 79.8% | 15.5% |
| Comparative Example 8 | 24 | 63.6% | 80.9% | 69.9% | 20.1% |
| Comparative Example 9 | 23 | 64.4% | 82.2% | 68.2% | 17.9% |
| Comparative Example 10 | 25 | 63.4% | 81.2% | 67.9% | 17.9% |
| Comparative Example 11 | 24 | 65.3% | 80.7% | 66.6% | 16.7% |
| Comparative Example 12 | 28 | 62.3% | 81.3% | 64.7% | 15.8% |
| Comparative Example 13 | 23 | 67.6% | 83.4% | 67.8% | 18.3% |

From the above data, it can be clearly seen that with the sulfonate compound, the properties of internal resistance, low-temperature cycling, large-rate room-temperature cycling, high-temperature cycling, and the high-temperature storage expansion of the battery were all significantly improved. Examples 1-13 were obviously superior to the comparative examples thereof. In addition, the results of Example 10 showed that without a second additive, the battery also exhibited a very low internal resistance, good low-temperature cycling, large-rate room-temperature cycling, and high-temperature cycling, and significantly suppressed high-temperature storage expansion. Therefore, the battery prepared by using the electrolyte solution of the present invention can obtain a lower internal resistance, better low-temperature cycling, large-rate room-temperature cycling, and high-temperature cycling, and a lower high-temperature storage expansion.

The foregoing examples are only illustrative, and are used to explain some of the features of the method of the present invention. The appended claims are intended to claim the widest possible scope that can be envisaged, and the examples presented herein are only illustrative of selected implementations based on combinations of all possible embodiments. Therefore, the intention of the applicant is that the appended claims are not limited by the selection of examples illustrating the features of the present invention. Some numerical ranges used in the claims also include sub-ranges which include themselves, and changes in these ranges should also be interpreted as being covered by the appended claims when possible.

## Claims

1. An electrolyte solution of secondary lithium-ion battery, comprising a non-aqueous solvent, a lithium salt and an additive, wherein the additive comprises a sulfonate compound.

2. The electrolyte solution of secondary lithium-ion battery according to claim 1, wherein the sulfonate compound is at least one compound selected from compounds represented by the general formula (A): 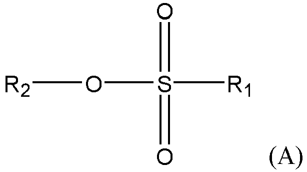 wherein R₁ and R₂ are each independently selected from any one of aliphatic hydrocarbon groups having 1-5 carbon atoms, aryl, alkyl-substituted aryl, and silanyl; and any of the above groups can be substituted with a halogen atom.

3. The electrolyte solution of secondary lithium-ion battery according to claim 2, wherein R₁ and R₂ are each independently selected from any one of methyl, ethyl, propyl, fluoromethyl, fluoroethyl, vinyl, allyl, phenyl, benzyl, fluorophenyl, trimethylsilanyl, and trivinylsilanyl.

4. The electrolyte solution of secondary lithium-ion battery according to any one of claims 1-3, wherein the sulfonate compound is one or more selected from the group consisting of 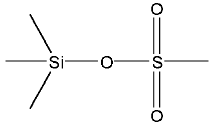 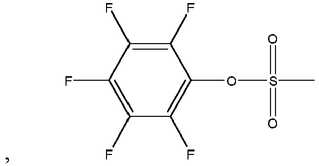 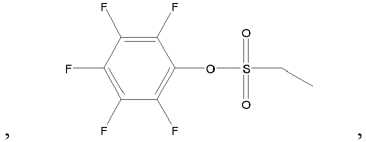 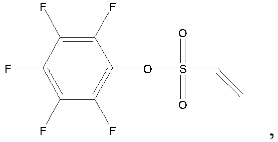 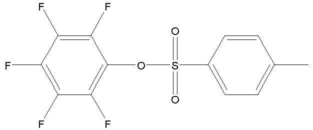 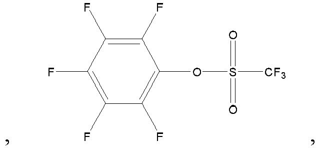 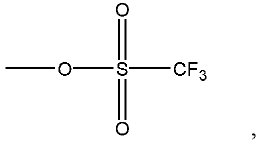 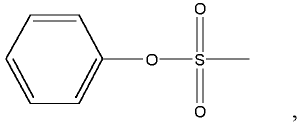 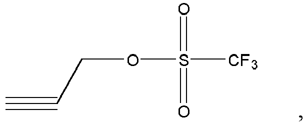 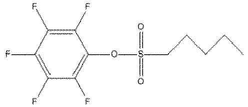 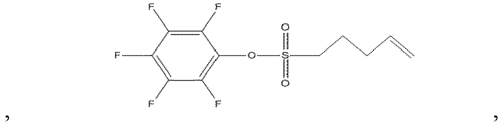 and

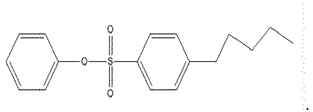

5. The electrolyte solution of secondary lithium-ion battery according to any one of claims 1-4, wherein the mass of the sulfonate compound accounts for 0.1-5% of the total mass of the electrolyte solution.

6. The electrolyte solution of secondary lithium-ion battery according to any one of claims 1-5, wherein the additive further comprises a second additive, and the second additive is one or more selected from the group consisting of vinylene carbonate, fluoroethylene carbonate, lithium difluorophosphate, lithium bis(oxalato)borate, lithium difluoro(oxalato)borate, 1,3-propanesultone, triallyl isocyanurate, methylene methanedisulfonate, vinyl sulfate, triallyl phosphate, tripropynyl phosphate, tris(trimethylsilanyl) phosphate, and tris(trimethylsilanyl) borate.

7. The electrolyte solution of secondary lithium-ion battery according to claim 6, wherein the mass of the second additive accounts for 0.01-10% of the total mass of the electrolyte solution.

8. The electrolyte solution of secondary lithium-ion battery according to any one of claims 1-7, wherein the mass of the non-aqueous solvent accounts for 67-91% of the total mass of the electrolyte solution.

9. The electrolyte solution of secondary lithium-ion battery according to any one of claims 1-8, wherein the non-aqueous solvent comprises a cyclic ester and a chain ester.

10. The electrolyte solution of secondary lithium-ion battery according to claim 9, wherein the cyclic ester is one or more selected from the group consisting of ethylene carbonate, propylene carbonate, butylene carbonate, and γ-butyrolactone.

11. The electrolyte solution of secondary lithium-ion battery according to any one of claims 9 and 10, wherein the chain ester is one or more selected from the group consisting of dimethyl carbonate, diethyl carbonate, diethylcarbonate, dipropyl carbonate, methyl ethyl carbonate, methyl propyl carbonate, ethyl propyl carbonate, methyl formate, ethyl formate, propyl formate, methyl acetate, ethyl acetate, propyl acetate, methyl propionate, ethyl propionate, propyl propionate, and 2,2-difluoroethyl acetate.

12. The electrolyte solution of secondary lithium-ion battery according to any one of claims 1-11, wherein the mass of the lithium salt accounts for 8-18% of the total mass of the electrolyte solution.

13. The electrolyte solution of secondary lithium-ion battery according to any one of claims 1-12, wherein the lithium salt is at least one selected from the group consisting of lithium hexafluorophosphate, lithium bis(fluorosulfonyl)imide, and lithium bis(trifluoromethanesulfonyl)imide.

14. A secondary lithium-ion battery, comprising a positive electrode, a negative electrode and an electrolyte solution, wherein the electrolyte solution is the electrolyte solution according to any one of claims 1-13.

15. The secondary lithium-ion battery according to claim 14, wherein the secondary lithium-ion battery is any one selected from the group consisting of lithium-ion battery, lithium-sulfur battery, and lithium air battery.

16. The secondary lithium-ion battery according to claim 14 or 15, wherein an active material of the positive electrode is a lithium-containing transition metal oxide and/or a lithium-containing transition metal phosphate compound.

17. The secondary lithium-ion battery according to claim 16, wherein the active material of the positive electrode is any one selected from the group consisting of Li₁₊ₐ(NiₓCo_{y}M_{1-x-y})O₂, Li(NiₙMnₘCo₂₋ₙ₋ₘ)O₄, and LiMₚ(PO₄)_{q}, wherein 0≤a≤0.3, 0≤x≤1, 0≤y≤1, 0≤x+y≤1, 0≤n≤2, 0≤m≤2, and 0≤n+m≤2, M is any one selected from the group consisting of Al, Fe, Ni, Co, Mn, and V, 0<p<5, and 0<q<5.

18. The secondary lithium-ion battery according to any one of claims 14-17, wherein an active material of the negative electrode is one or more selected from the group consisting of metal lithium, lithium alloy, carbon material, silicon or tin and an oxide thereof.
